# EUROPEAN PATENT APPLICATION

(11) **EP 4 775 697 A1**
(43) Date of publication of application: **15.07.2026**
(21) Application number: 25382011.2
(22) Date of filing: 10.01.2025
(51) Int. Cl.: C22B 3/10, C22B 3/34, C22B 3/36, C22B 3/44, C22B 7/00, C22B 3/00

(54) **RECYCLABLE ORGANIC LIGANDS FOR SELECTIVE EXTRACTION OF COBALT IN LITHIUM ION BATTERIES**

(71) Applicant: Universidad del País Vasco/Euskal Herriko Unibertsitatea, 48940 Leioa, Vizcaya (ES); Innovation Tree S.L., 20120 Hernani (ES)
(72) Inventor: LANDA ALVAREZ, Aitor, 48940 Leioa, Bizkaia (ES); GAMBOA LANDA, Jose Ignacio, 48940 Leioa, Bizkaia (ES); AZCONA CALERO, Mikel, 20120 Hernani (ES); IZQUIERDO ARRUFERIA, June, 20120 Hernani (ES); OYARBIDE GARMENDIA, Juan Miguel, 48940 Leioa, Bizkaia (ES)
(74) Representative: Balder IP Law, S.L.

(57) **Abstract**

The present invention relates to a method for selectively recovering cobalt from lithium ion batteries (LIBs) which comprises: (i) providing a black mass containing metals; (ii) leaching the black mass obtaining a first solution containing said metals; (iii) basifying the first solution to obtain a precipitate comprising cobalt; (iv) dissolving the precipitate with concentrated HCl, HBr, or HI, obtaining a second solution which is evaporated to obtain a crude product comprising CoX₂ (with X being Cl, Br, or I), (v) forming an organometallic cobalt complex by contacting the crude product with an organic ligand of formula (I) in the presence of a mixture of solvents; and (vi) separating the cobalt and the chelating agent from the organometallic complex formed by means of liquid-liquid extraction. Furthermore, the invention relates to the use of an organic ligand of formula (I) for recovering cobalt from LIB.

## Description

### TECHNICAL FIELD

The present invention is comprised in the technical sector of metal recycling, and more specifically in the area of coordination chemistry. In particular, a method is proposed for the selective recovery of cobalt in lithium ion batteries (LIBs) that have reached the end of their service life using bidentate organic ligands. The method comprises, as key purification steps, on one hand, precipitating organometallic cobalt complexes between said ligands and the transition metal Co (II) and, on the other hand, recovering all the organic ligands and cobalt, particularly in the form of CoCl₂, by means of a simple liquid-liquid extraction.

### STATE OF THE ART

LIBs are currently one of the most widely used electrochemical energy storage devices, powering both mobile electronic devices and electric vehicles. The production of these batteries grows exponentially and, soon, the number of batteries reaching the end of their service life cycle will increase significantly. Several of the materials and elements associated with LIBs, such as Li, Ni, Mn, and Co, are considered critical, strategic materials due to their scarcity and uncertain supply (Cao, Han et al.., Hydrometallurgy 2020, 193, 105327. https://doi.org/10.1016/j.hydromet.2020.105327).

Currently, more than 50% of the world's Co production is used in the manufacture of rechargeable lithium cobalt oxide (LCO) batteries. Due to their good electrochemical performance, LCO batteries feature cobalt as the central active material and have a layered cobalt oxide (LiCoO₂) cathode. Therefore, lithium ions move from the anode to the cathode during discharge and the flow is reversed when charging.

Although the content of these batteries is valuable and recyclable, due to various factors, less than 10% is recovered today. Most of them were reused by means of pyrometallurgical methods, but due to the high energy costs and environmental pollution associated with said methods (emissions of gases such as SO₂ and CO₂), they are not viable today.

Therefore, interest in a milder method that works in solution, called hydrometallurgy, has been increasing since the 1960s (Zhu, Xie, Ren et al., Energies 2022, 15, 1611. https://doi.org/10.3390/en15051611). This method is characterized by the extraction of metal from ore by means of forming an aqueous solution of a metal salt and the recovery of the metal from the solution by precipitation, cementation, or solvent extraction. However, a major drawback of this method is that the extraction of metals is usually carried out at high temperatures and, furthermore, the removal of waste acids used in the process represents an additional cost. Currently, 70% of the world's cobalt is produced and recycled by means of hydrometallurgical methods.

Accordingly, an ideal hydrometallurgical process would involve: first, a low-cost, safe, and highly efficient leaching step; second, precipitation of the metal of interest with easily accessible ligands; and finally, release and regeneration of the ligands. However, at present, although existing hydrometallurgical processes have successfully solved the leaching step, the steps of selective precipitation of the metal of interest with easily accessible ligands and their subsequent release are still quite limited (Mansur et al., Mineral Processing and Extractive Metallurgy Review 2021, 43, 489-509. https://doi.org/10.1080/08827508.2021.1883014).

Recycling of rechargeable LCO batteries using organic ligands has focused primarily on purifying the Co (III) and Li (I) present in the positive electrode (cathode) once it has been mechanically separated from the rest of the battery (Nowak et al., Adv. Energy Mater. 2022, 12, 2102917. https://doi.org/10.1002/aenm.202102917). However, due to the complexity of new batteries, this manual separation of the cathode is becoming increasingly cumbersome, thus making processing difficult. Furthermore, treatment of the battery as a whole means that other metals, such as aluminum (III) and copper (II), can be found together in the leachate. Copper (II) has a charge density, size, and binding affinity to organic ligands similar to that of cobalt (II).

For the aforementioned reasons, it is clear that, firstly, there is an increasing need to develop new selective organic ligands that preferably coordinate with cobalt and cause it to precipitate and, secondly, these ligands must be easily released from the organometallic complex formed in order to separate them from cobalt, which would represent an undeniable progress in LCO battery recycling technology.

Most of the methods which use purely organic ligands use oxalic acid because they form an insoluble CoC₂O₄.2H₂O precipitate that is separated by filtration from the rest of the solution. For example, Tang (Tang et al., Hydrometallurgy 2011, 108, 80-86. https://doi.org/10.1016/j.hydromet.2011.02.010) described a process which comprises first leaching the *"black mass"* with 4M H₂SO₄ and then precipitating cobalt by means of coordination with oxalic acid. Generally, these methods allow cobalt to be recovered with high efficiency (yields greater than 90% and purities of up to 99.9%). However, they often entail some significant drawbacks such as requiring prior manual separation of the cathode (mainly composed of LiCoO₂) and prior extraction of cobalt (II) from the aqueous phase with the extractant P507. Furthermore, it involves using, as an organic ligand, an acid that is strong (pKa 1.19), corrosive (GHS05), and irritating (GHS07), in addition to being toxic by inhalation, ingestion, or skin penetration (GHS08). Finally, these methods often require thermal pretreatment of the depleted battery (about 700°C) with a reducing agent (hydrogen peroxide (H₂O₂), ascorbic acid, or citric acid) to obtain high lithium and cobalt leaching efficiency, which makes them not viable on a large scale. Another drawback of these methods with oxalic acid is that the regeneration of LiCoO₂ from the CoC₂O₄.2H₂O obtained is performed by means of heat treatment, heating first at 600°C for 6 hours, and then at 800°C for 10 hours. Furthermore, the decomposition of CoC₂O₄.2H₂O releases mainly CO₂ and CO as byproducts.

In another selective cobalt precipitation method described by Peralta (Peralta et al., Separation and Purification Technology 2022, 281, 119890. https://doi.org/10.1016/j.seppur.2021.119890), 4-methyl-imidazole is used as an organic ligand. This process starts from a *"black mass"* coming from the cathode of nickel-manganese-cobalt (NMC) batteries. To dissolve the metals present in the *"black mass",* an acid leaching was first performed using a 1 M H₂SO₄ solution combined with 10% H₂O₂, then the ligand 4-methyl-imidazoline was added to the solution obtained. The precipitate obtained contained more than 80% of cobalt present in the initial solution with a purity of 94.4%. The regeneration of LiCoO₂ was performed by mixing the cobalt precipitate obtained with Li₂CO₃ and heating at 850°C for 24 hours. The main drawbacks of the process include the fact that 4-methyl-imidazole is a carcinogenic chemical agent, so, in addition to the energy expenditure, its use on a large scale would not be viable. Moreover, the organic ligand is not regenerated and the precipitate from the first step has aluminum impurities, so the ligand is not selective towards this metal.

More recently, the selective precipitation of cobalt by means of using a nonionic eutectic solvent composed of N-methylurea and acetamide under relatively mild conditions has been described (Suriyanarayanan, Ramanujam, Nicholls et al., ACS Omega 2023, 8, 6959-6967. https://doi.org/10.1021/acsomega.2c07780). It was seen that cobalt could be recovered with an extraction efficiency exceeding 97%. However, this process has the following more notable drawbacks: 1. the need for prior manual separation of the cathode and subsequent separation of the active material (LCO) from the aluminum collector by means of a sonication process in N-methyl-2-pyrrolidone (NMP); 2. the need to heat the mixture at high temperatures (180°C) for a long time (48 hours) for cobalt extraction; 3. low recyclability of N-methylurea-acetamide; 4. possible formation of byproducts such as biuret and ammonia at temperatures above 100°C; 5. acetamide is a potentially irritating substance and is a carcinogenic chemical agent (GHS08).

Therefore, taking into account all the above, it is clear that there is an existing need to provide organic ligands that address the drawbacks associated with existing processes and allow selective isolation by means of precipitation of cobalt from other transition metals present in LCO rechargeable batteries as a whole.

### DESCRIPTION OF THE INVENTION

One aspect of the present invention relates to a method for recovering cobalt from lithium ion batteries, characterized in that the method comprises the following steps:
(i) providing a *black mass* containing metals from lithium ion batteries in their entirety;
(ii) leaching the *black mass* of step (i) to obtain a first solution comprising the metals contained in said black mass;
(iii) basifying the first solution obtained in step (ii) to obtain a precipitate comprising cobalt, preferably in the form of cobalt carbonate, CoCO₃;
(iv) dissolving the precipitate obtained in step (iii) with concentrated HCl, HBr or HI, thereby obtaining a second solution, and evaporating the second solution to obtain a crude comprising a cobalt salt, preferably in the form of CoCl₂;
(v) forming an organometallic cobalt complex by contacting the crude obtained in step (iv) with a chelating agent of formula (I) 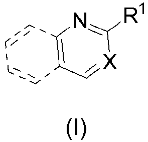 wherein
   X is selected independently from C and N,
   R¹ is: = SH, 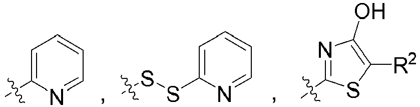
   and R² is H, alkyl, or aryl;
   in the presence of a mixture of solvents comprising an alcohol, selected from the group consisting of methanol (MeOH), ethanol (EtOH), and isopropanol; and acetonitrile (CH₃CN); and
(vi) separating the cobalt in salt form and recovering the chelating agent from the organometallic complex obtained in step (v) by means of liquid-liquid extraction.

In the context of the present invention, the expression *"black mass"* or *"black powder"* is used interchangeably to refer to a type of powder which is obtained from lithium ion batteries and may contain lithium, cobalt, aluminum, iron, copper, and graphite.

In the context of the present invention, the terms "lithium ion battery" and "lithium-ion battery" can be used interchangeably and it is understood that said term means any battery containing lithium ions, such as lithium cobalt oxide (LCO) batteries, batteries containing lithium, nickel, manganese, and cobalt (NMC), and lithium, nickel, cobalt, and aluminum (NCA) batteries. In particular, the lithium ion batteries according to the invention are batteries at the end of their service life with LCO chemistry.

The method of the present invention has the great advantage of being a simple, cost-effective, non-polluting, and highly selective method for the extraction of cobalt from the *"black mass"* of LCO batteries by means of using, for the first time, organic heterocyclic ligands (chelating agents) such as those described in the invention. Furthermore, another great advantage associated with the method described herein is that the organic ligands used in the present invention for the extraction of cobalt can be easily regenerated for reuse, with excellent yields and chemical purity, without the need to use complex and economically inviable experimental methods, i.e., thermal methods or by means of toxic reagents.

It should be noted that one of the major drawbacks in processes for extracting cobalt from LIB batteries is that in the treatment of the battery in its entirety, other metals with a charge density, size, and binding affinity similar to Co, such as Cu (II) and Fe (II), are obtained. This problem is eliminated with the method of the present invention, since the cobalt present in the LIB battery is isolated selectively and efficiently using mild operating conditions.

The method for the selective recovery of cobalt from lithium ion batteries described herein starts from a first step i) in which a *""black mass"* containing metals originating from the recycling of LIB batteries in their entirety is provided or obtained.

In the context of the present invention, the terms "in its or their entirety" or "as a whole" may be used interchangeably and refer to the fact that the black mass is obtained from any part of the LIB battery, i.e., the anode and the cathode.

The "black mass" provided in step i) of the method of the invention can be obtained from LIB batteries by means of methods known to one skilled in the art. For example, the black mass can be obtained after crushing and separating battery components such as casings.

In the context of the invention, the method for recovering cobalt from LIB batteries described herein comprises a step (ii) of leaching the black mass from step (i) in order to obtain a first solution comprising the metals contained in said "black mass". Therefore, the cobalt initially contained in the black mass is found as cobalt salt (CoX₂, wherein X = Cl, Br, or I) in said first solution.

In the context of the invention, the terms "aqueous phase" or "solution" may be used interchangeably.

In particular embodiments of the invention, this leaching step (ii) can be carried out with HCl, HBr, and HI at a concentration of 3-6 M, preferably at a concentration of 4-5 M, more preferably at a concentration of 4 M, for a time of 3 to 5 hours, more preferably for a time of 3 hours, at a temperature of 50 to 90°C, preferably at a temperature between 75°C and 80°C, more preferably at a temperature of 80°C (Subramanian et al., Waste Management Bulletin 2024, 2, 275-288. https://doi.org/10.1016/j.wmb.2024.08.007).

Therefore, in this step (ii) of leaching with HCl, HBr, or HI, the synthesis of the respective metal chlorides, bromides, or iodides of the metals present in the LIB battery that are found in the first solution takes place and they can be separated from the solid remains by means of decantation and filtration or any other method described in the state of the science.

In particular embodiments, the leaching efficiency for this step (ii) of the method of the invention is 80-97% for lithium, preferably 95% for lithium; 80-99% for cobalt, preferably 95% for cobalt.

Preferably, this leaching step can be carried out using 4 M HCl for 3 hours at 80°C (Zhang et al., Hydrometallurgy 1998, 47, 259-271. https://doi.org/10.1016/S0304-386X(97)00050-9) and separating the metal chlorides found in this first solution from the solid remains by means of decantation and subsequent filtration with filter paper (for example, but not limited to, using a F4573 thick filter paper with a basis weight of 73 g/m² and a thickness of 170 µm). Under these reaction conditions, high leaching efficiencies are obtained; for example, but not limited to, 97% for lithium and 99% for cobalt.

In other particular embodiments of the invention, the proportion between the *"black mass"* and the HCl, HBr, and HI may vary between 60 and 100 g/liter, with a proportion of 100 g/liter being preferred.

In the method of the present invention, a step (iii) takes place which comprises basifying the first solution obtained in step (ii) to obtain a precipitate comprising cobalt in the form of a salt, preferably in the form of cobalt carbonate. In preferred embodiments of the invention, this step (iii) of basifying the first solution can be carried out at a pH value varying from 6.5 to 8.7, preferably at a pH of 8.5.

The total recovery rate of cobalt obtained in this basification step at a pH value varying from 6.5 to 8.7, preferably at a pH value of 8.5, may vary from 70 to 84%, preferably 80%, based on the quantification of the rest of the metals present in the first dissolution.

In particular embodiments of the invention, step (iii) of basifying the first solution obtained in step (ii) can be carried out at different pH values, thereby collecting a different precipitate at each of these pH values. For example, but without limitation, the first solution obtained in step (ii) can be treated with Na₂CO₃ at a pH value of 3 to 5.5, preferably at a pH of 3.5 to 4, to obtain a first fraction comprising a first precipitate; subsequently said first solution can be treated with Na₂CO₃ at a pH value of 5.5 to 8.5, preferably at a pH of 8 to 8.5, to obtain a second fraction comprising a second precipitate; and finally it can be treated with Na₃PO₄ at a pH value of 8.5 to 10.5, preferably at a pH of 9 to 9.5, thereby obtaining a third fraction comprising the third and last precipitate.

Therefore, by way of non-limiting example, the cobalt recovery rate at each of these pH values may vary from 1 to 14%, preferably it is 9.8%, in the first fraction comprising the first precipitate; from 70 to 84%, preferably 80%, in the second fraction comprising the second precipitate; and from 4 to 0.1%, preferably 0.11 %, in the third fraction comprising the third and last precipitate, based on the quantification of the total amounts of the rest of the metals present in each of the fractions.

The basification of the first solution in step (iii) of the method described herein can be carried out with an inorganic base selected from the group listed below: Na₂CO₃, K₂CO₃, NaHCO₃, Na₃PO₄, KOH, or NaOH, or combinations thereof. In preferred embodiments, the basification is carried out with Na₂CO₃. In even more preferred embodiments, the basification is carried out with Na₂CO₃ in combination with Na₃PO₄.

The quantification of each of the metals in the different fractions obtained can be carried out by means of any analytical technique known to one skilled in the art. For example, without limitation, the precipitate obtained after the basification step (iii) can be subjected to a digestion process with HNO₃ to, after applying the corresponding dilution, quantitatively determine the metal content by inductively coupled plasma atomic emission spectroscopy (ICP-AES) analysis.

The method described in the present invention further comprises a step (iv) in which the precipitate obtained in step (iii) is dissolved with concentrated HCl, HBr, or HI and a second solution is obtained which is evaporated to thereby obtain a residue comprising a cobalt salt.

In the context of the invention, concentrated HCl, HBr, or HI is understood to mean an aqueous solution in which HCl is present at a weight concentration of 35-37%, preferably 37% by weight; HBr is present at a weight concentration of 45-47%, preferably 47%; and HI is present at a weight concentration of 55-57%, preferably 57%.

In the context of the invention, the terms "crude" or "residue" may be used interchangeably.

In particular embodiments, step (iv) of the method of the invention is carried out by dissolving the precipitate obtained in step (iii) with 37% HCl, thereby obtaining a second solution which is subsequently evaporated to obtain a residue or crude comprising a cobalt salt, preferably in the form of CoCl₂.

In even more particular embodiments in which basification in step (iii) is carried out at various pH values, step (iv) of the method of the invention takes place by dissolving the precipitate of the fraction with the highest cobalt content, particularly the precipitate obtained by basifying at a pH value of 5.5 to 8.5, preferably at a pH of 8 to 8.5, with concentrated HCl, HBr, or HI, preferably with concentrated HCl, thereby obtaining a second solution, and the second solution is evaporated to obtain a crude or residue comprising a cobalt salt.

Subsequently, the method of the present invention comprises a purification step (v) in which the separation of cobalt from the other metals takes place, wherein said step (v) comprises contacting the crude obtained in step (iv) with a chelating agent of formula (I), 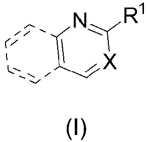
wherein X is selected independently from C and N,
R¹ is: = SH, 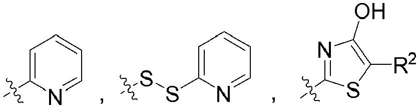
and wherein R²is a substituent: H, alkyl, or aryl;
in the presence of a mixture of solvents comprising an alcohol, selected from methanol, ethanol, or isopropanol, and acetonitrile to form an organometallic complex between the chelating agent (organic ligand) and the cobalt salt (CoCl₂).

In particular, the organic ligands according to the invention are bidentate organic ligands and are selected from the group consisting of:
- Ligands **1** (2,2'-Dithiodipyridine) and **2** (2-Mercaptopyridine) which are commercially available compounds: 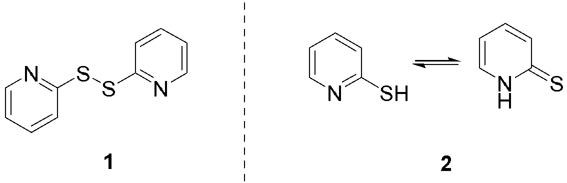
- Organic ligands **3** which are 5H-thiazol-4-ones and synthesized from the method described in: Palomo et al., Angew. Chem. Int. Ed. 2013, 52, 11846-11851. http://dx.doi.org/10.1002/anie.201305644.

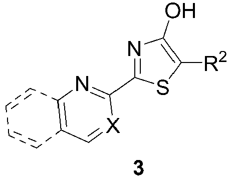

wherein X is selected independently from C and N,
and wherein R²is a substituent: H, alkyl, or aryl.

In more particular embodiments, organic ligands 3 are selected from the group consisting of:

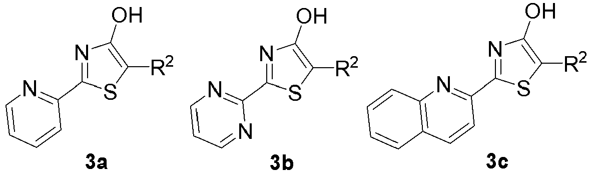

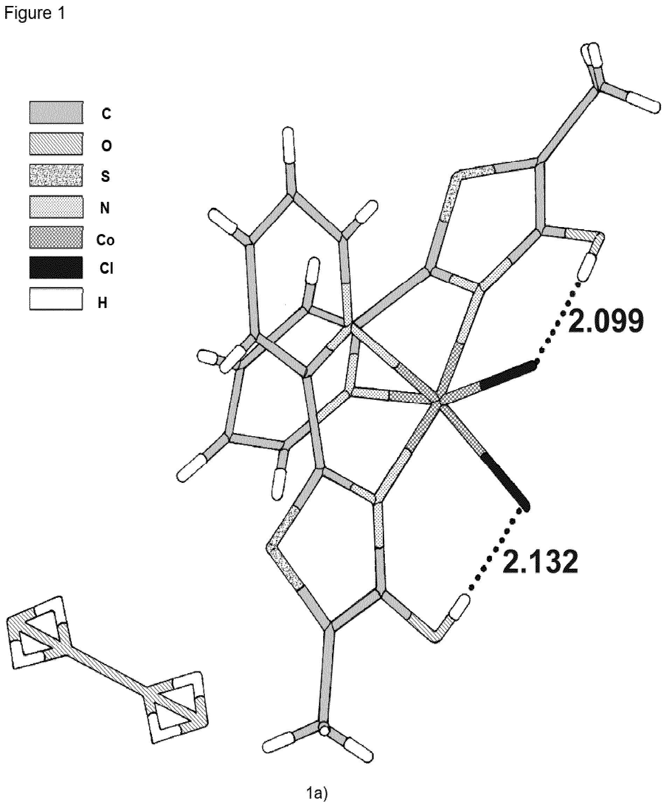

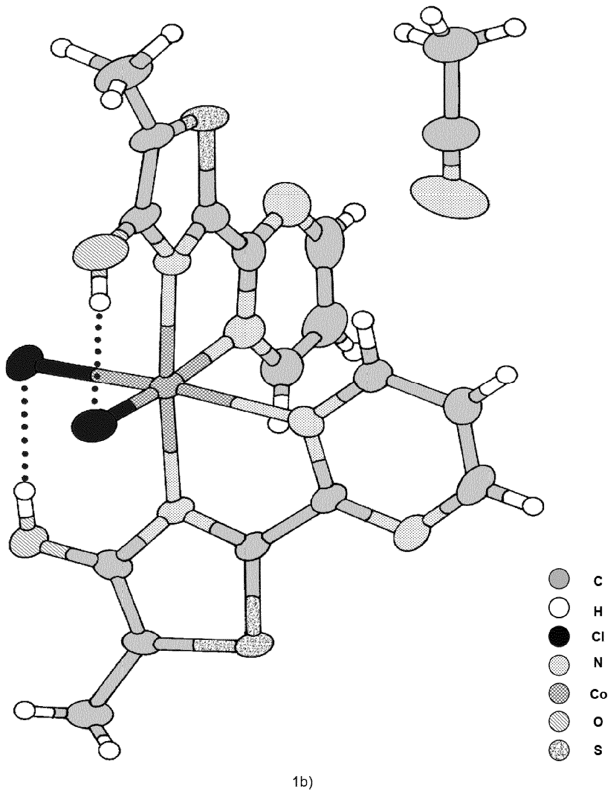

The inventors found that these bidentate organic ligands **1-3** which have heteroatoms of the N, O, S type and had not been previously used in the extraction of cobalt present in LIB batteries, formed an organometallic complex with cobalt that is slightly soluble in a mixture of solvents as described in this document (preferably in a 1:1 MeOH/CH₃CN mixture), thus precipitating mostly the cobalt. As shown in Figure 1, with organic ligands **3** , the formation of an octahedral organometallic complex having a L₂CoCl₂ composition (wherein L can be a type **3** ligand) was observed by means of X-ray diffraction.

Type **3** organic ligands or chelating agents according to the present invention can be easily synthesized in a single step from economically viable starting reagents. Following a method described by the inventors (see above), type **3** ligands, i.e, thiazolones **3,** can be prepared by means of treatment of the corresponding α-monosubstituted α-mercaptocarboxylic acids with the corresponding aromatic nitrile of pyridine (in the case of ligand **3a**), pyrimidine (in the case of ligand **3b**), or quinoline (in the case of ligand **3c**).

In preferred embodiments of the invention, the organic ligand or chelating agent is the commercial compound **1** or the commercial compound **2.** In even more preferred embodiments, the organic ligand or chelating agent is ligand **3a** or ligand **3b.**

In particular embodiments, this step (v) of separating cobalt from other metals present in the lithium ion battery may comprise treating the crude obtained in step (iv) with HCl, HBr, or HI at a concentration of 3-12 M, for a time of 10 min to 60 min, at a temperature of 20°C to 25°C. In preferred embodiments, this step (v) comprises treating the crude obtained in step (iv) with 12 M HCl for 30 min at a room temperature of 20°C, thereby obtaining a third solution, removing the resulting liquid from this third solution by means of evaporation under reduced pressure (50°C, 450 mbar); and redissolving the dry crude in CH₃CN to subsequently treat it with a chelating agent or organic ligand of formula (I) according to the invention (in particular, with ligands **1, 2,** or **3a-c** defined in this document) previously dissolved in MeOH, thereby forming the organometallic complex between the chelating agent and the cobalt salt (CoX₂, wherein X = Cl, Br, or I, preferably CoCl2).

In the context of the invention, the expression "room temperature" refers to a temperature of 20 to 25°C, preferably 20°C.

In even more particular embodiments, the resulting reaction mixture between the dry crude dissolved in CH₃CN obtained as described above and the chelating agent dissolved in MeOH can be kept at room temperature for a time of 1 to 24 hours, preferably between 10 and 16 hours, and the solid obtained is subsequently filtered by means of any known filtration method described in the state of the science. For example, the filtrate obtained can be washed with ether, preferably ethyl ether, and dried by means of standard laboratory methods such as vacuum evaporators or hot air desiccators.

In other particular embodiments, this step (v) of the method of the invention comprises adding 2 to 3 equivalents of the chelating agent or organic ligand described herein, preferably 2.1 equivalents, with respect to the equivalents of cobalt present in the crude redissolved in CH₃CN.

In the context of the present invention, the expression "equivalents" refers to the number of moles of one reagent that react with one mole of another reagent, based on a stoichiometric ratio. In particular, the expression "1 equivalent of chelating agent" refers to 1 mole of chelating agent or organic ligand that participates in the reaction and reacts with 1 mole of another reagent (for example, the cobalt present in the CoCl₂ salt).

Therefore, step v) of the method described herein allows obtaining an organometallic complex between cobalt and the bidentate organic ligands according to the invention with a yield of 70-85%, preferably 77%.

The method for recovering cobalt from lithium ion batteries of the present invention further comprises a step (vi) in which the cobalt salt and the chelating agent are separated from the organometallic complex obtained in step (v) by means of liquid-liquid extraction.

The inventors found that the bidentate organic ligands described herein could be easily released from the complex formed with cobalt. Therefore, the ligands of the present invention are recyclable and reusable, because in the presence of water the dissociation of the organic ligand and CoCl₂ takes place, and they have a recycling rate of between 75 and 95%, preferably between 80 and 90%, more preferably 85%. Accordingly, the method for the selective recovery of cobalt from LIB batteries described herein advantageously allows, by washing with water (green chemistry), recovering the cobalt and at the same time releasing the ligand that can be reused in subsequent processes.

Without being subject to any verification, it is hypothesized that interaction between the hydroxyl group (OH) of the organic ligands (**3a** and **3b**) and the halide atom, preferably chlorine atom, directly bound to the cobalt, causes the metal to lose electron density and this allows a deficient nucleophile such as H₂O to coordinate with the metal and displace the organic ligand.

In particular embodiments of the invention, the liquid-liquid extraction of step (vi) is carried out by means of any of the standard methods established for this purpose such as manual or automatic decantation, percolation, etc. For example, without limitation, an effective liquid-liquid extraction may comprise 2 to 6 extractions in a decantation system.

In other particular embodiments of the invention, the liquid-liquid extraction of step (vi) comprises several extractions in a separatory funnel with a mixture of water and an immiscible organic solvent, preferably dichloromethane, chloroform, ethyl acetate, or carbon tetrachloride.

In other even more particular embodiments of the invention, the liquid-liquid extraction of step (vi) can be performed with a mixture of water and an immiscible organic solvent selected from the following list: dichloromethane, chloroform, ethyl acetate, and carbon tetrachloride. In preferred embodiments, this liquid-liquid extraction can be carried out in a mixture of H₂O and dichloromethane (CH₂Cl₂) at room temperature, more preferably in a 1:1 mixture of H₂O and CH₂Cl₂ at room temperature. In even more preferred embodiments, this liquid-liquid extraction stage can be performed with the aid of mechanical stirring at a stirring speed that may vary from 50 rpm to 200 rpm, preferably at a stirring speed of 100 rpm to 150 rpm.

Following the liquid-liquid extraction, the separation and release of the ligand from the metallic complex takes place by means of any technique for separating the obtained phases known to one skilled in the art, thereby obtaining, on one hand, the cobalt in the aqueous phase and, on the other hand, the chelating agent in the organic phase.

In particular embodiments of the invention, the cobalt salt of step (vi) is a divalent salt or mixture of salts with a predominance of the divalent salt. In preferred embodiments, the cobalt salt is a halide. In even more preferred embodiments, the cobalt salt is a cobalt chloride, CoCl₂, or a cobalt bromide, CoBr₂.

Preferably, this liquid-liquid extraction step (vi) is performed with a 1:1 mixture of water and CH₂Cl₂ and the separation of cobalt and type **1-3** ligands from the organometallic complex formed between the cobalt and the organic ligands takes place after separation and evaporation of the two phases, thereby obtaining the cobalt CoCl₂.6H₂O in the aqueous phase and the chelating agent in the organic phase.

Therefore, the method described herein allows cobalt to be recovered in the form of CoCl₂.6H₂O (pale pink color), which is one of the most widely sold and used commercial forms of cobalt in the industry, or in the forms of anhydrous CoCl₂ (blue color) after drying the cobalt hexahydrate in an oven at 80°C for 16 hours.

In particular embodiments of the invention, the organometallic complexes formed between CoCl₂ and the ligands **3a** and **3b** described in the present invention have the molecular formula L₂CoCl₂ and an octahedral molecular geometry as can be determined by means of X-ray diffraction of a single crystal of the complexes obtained (Figure 1).

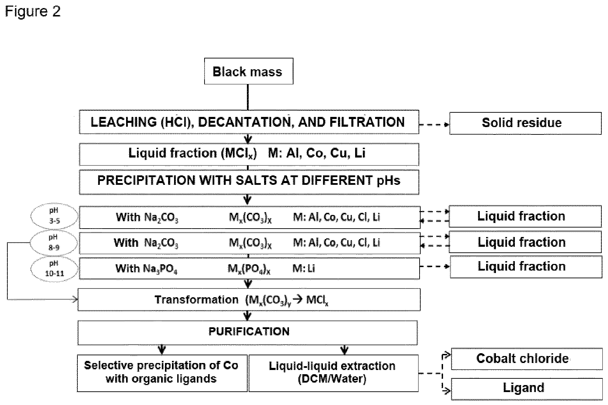

In preferred embodiments, the method of the present invention is as described in Figure 2, wherein a black mass containing metals originating from a lithium ion battery as a whole (anode and cathode) is leached with 4 M HCl (for 3 hours at a temperature of 80°C and a proportion of black mass and HCl of 100 g/l), thereby obtaining a first aqueous solution of metal chlorides, with more than 95% of the cobalt (CoCl₂) and lithium (LiCl) present in said black mass being recovered by means of decantation and filtration (Li et al., Chemosphere 2009, 77, 1132-1136. http://10.1016/j.chemosphere.2009.08.040 and Laucournet et al., Power Sources 2014, 247, 551-555. http://dx.doi.org/10.1016/j.jpowsour.2013.08.128). The basification and filtration of said first aqueous solution at different pH values is then carried out by means of first treating with Na₂CO₃ at a first pH value of 3 to 5, then with Na₂CO₃ at a second pH value of 8 to 9, and finally with Na₃PO₄ at a pH of 10 to 11. Subsequently, the precipitate obtained in the fraction treated at a pH value of 8 to 9 with concentrated HCl is dissolved, obtaining a second solution that is evaporated to obtain a crude comprising CoCl₂, which is contacted with a chelating agent of formula (I), such as those described in this document, in the presence of a mixture of solvents in a 1:1 proportion which comprises an alcohol, selected from methanol, ethanol, and isopropanol, and acetonitrile, thereby forming an organometallic complex. Finally, the separation of cobalt and the chelating agent from the organometallic complex obtained takes place by means of a liquid-liquid extraction in CH₂Cl₂/water, obtaining cobalt chloride in the aqueous phase and the corresponding organic ligand in the organic phase.

Advantageously, the method of the invention is readily scablable to an industrial scale (for example, to a scale of hundreds of kilograms). This is due to the fact that, firstly, the reaction conditions are mild and few byproducts are formed and, secondly, because it uses a simple and inexpensive purification process as a result of the quantitative recovery of the organic ligands of the present invention.

Furthermore, the method of the present invention allows recovering cobalt from lithium ion batteries with a high efficiency of 70-90%, preferably 85%, and a purity of 85-95%, preferably 90%.

Therefore, the method of the invention solves the drawbacks associated with existing methods that use organic ligands for the extraction of Co from lithium ion batteries since it does not involve a prior manual separation of the cathode forming the LIB batteries; it does not involve thermal treatments that are economically inviable and highly polluting in which CO and CO₂ are generated, nor does it use organic ligands that are difficult to handle for the selective precipitation of cobalt, and it allows cobalt to be selectively recovered with high extraction efficiency and high purity.

Another aspect of the invention relates to the use of a chelating agent in the recovery of cobalt from lithium ion batteries, wherein the chelating agent has the formula (I) 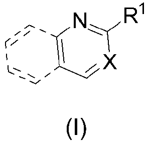
wherein X is selected independently from C and N,
R¹ is: = SH, 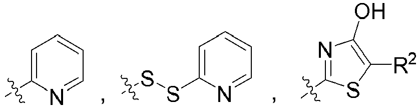
and wherein R²is a substituent: H, alkyl, or aryl.

In particular embodiments of the invention, the present invention relates to the use of a type **1, 2, 3a-3c** chelating agent such as those described in this document in the recovery of cobalt from LIB batteries. In preferred embodiments, the present invention relates to the use of type **1, 2,** or **3a, 3b** chelating agents in the selective recovery of cobalt from LIB batteries. In even more preferred embodiments, the present invention relates to the use of type **3a** or **3b** chelating agents in the selective recovery of cobalt from LIB batteries.

All the definitions and terms mentioned throughout this document apply to all aspects of the present invention.

Throughout the description and the claims, the word "comprise" and its variants are not intended to exclude other technical features, additions, components, or steps.

### FIGURES

The following figures are provided to complete the description and provide a better understanding of the invention. Said figures are an integral part of the description and illustrate particular embodiments of the invention, but should not be construed as limiting the invention.
Figure 1. This figure shows the image obtained by X-ray diffraction of the organometallic complex with octahedral geometry lambda-cis-dichloro-5H-thiazol-4-one-CoCl₂ obtained in the reaction between the ligands **3a** (Figure 1a) and **3b** (Figure 1b) and the Co present in LCO batteries.
Figure 2. This figure schematically illustrates a preferred embodiment of the method for the selective extraction of cobalt from lithium batteries according to the present invention.

### EXAMPLES

The following examples are provided by way of illustration, and are not intended to be limiting of the present invention.

### REAGENTS

The reagents used in the examples described below were:
4 M HCl was prepared from concentrated HCl (37%) supplied by Panreac (ITW reagents) and using deionized water for dilution. Na₂CO₃ and Na₃PO₄ were supplied by Panreac (ITW reagents). 2-Mercaptopyridine (98% purity) was supplied by BLD pharm. Pyridine (99% purity) was supplied by Merck. 2-Cyanopyridine, pyrimidine-2-carbonitrile, quinoline-2-carbonitrile, and 2-mercaptopropanoic acid were supplied by BLD pharm. Methanol and diethyl ether were supplied by Scharlau.

### EXAMPLE 1: Synthesis of thiazol-4-ones 3a-c.

One equivalent of 2-mercaptopropanoic acid and pyridine (20 mol%) was added to 1 equivalent of the corresponding carbonitrile (2-cyanopyridine or pyrimidine-2-carbonitrile or quinoline-2-carbonitrile) and the mixture was stirred for 4 hours at 120°C. The yellow solid formed was then filtered and washed with diethyl ether yielding the corresponding thiazol-4-ones **3a-c** with yields above 80% (i.e., with a yield of 82% for **3a,** a yield of 86% for **3b,** and a yield of 85% for **3c**).

### EXAMPLE 2: Recovery of cobalt from depleted LCO batteries using the synthesized ligand 5H-thiazol-4-one 3b

Starting from 20 g of *black mass* from discharged LIB batteries (anode and cathode) metal chlorides were prepared by means of leaching said black mass with 200 ml of 4 M HCl, maintaining the reaction mixture for 3 hours at 80°C, thereby obtaining a first solution. The metal chlorides obtained in this first aqueous solution were separated from the solid remains by means of decantation and filtration with a conical funnel and filter paper (F4573-Thick, basis weight 73 g/m², thickness 170 µm). This first solution was then basified at different pH values, with 3 precipitates thereby being collected, wherein for the first pH value of 3.94, 170 ml of this first aqueous solution was treated with 21 g of Na₂CO₃, for the second pH value of 8.64, 110 ml of this first aqueous solution was treated with 8 g of Na₂CO₃, whereas for the pH value of 10.7, 90 ml of this first aqueous solution was treated with 3 g of Na₃PO₄, with three precipitates being collected by means of filtration on a Büchner funnel with filter paper (F4573-Thick, basis weight 73 g/m², thickness 170 µm), in which the quantification of the metal content was carried out, obtaining the cobalt recovery percentages indicated in Table 1.

Quantification of the metal content in each of the precipitates obtained at each pH value was carried out by means of inductively coupled plasma atomic emission spectroscopy (ICP-AES) after treatment of said solid precipitates with 0.1-0.2 ml of concentrated HNO₃ and subsequent 1:5000 dilution; and it was found that the fraction containing a higher % of Co was the one obtained at a pH of 8.64 in which the following results were also obtained for the rest of the metals present therein:

**Table 1. Metal content of the precipitates obtained after the basification of the first solution at different pH values.**

| It was also observed that the fraction obtained at pH 10.7 contained mainly lithium (99.67%). | | | | | |
|---|---|---|---|---|---|
| **pH** | **ICP-AES** | **Al** | **Co** | **Cu** | **Li** |
| 3.94 | % (purity) | 76.73 | 9.77 | 4.97 | 8.53 |
| 8.64 | % (purity) | 27.28 | **64.08** | 7.49 | 1.15 |
| 10.7 | % (purity) | 0.16 | 0.11 | 0.06 | **99.67** |

Therefore, to achieve the selective separation of cobalt from the rest of the metals present in the battery, 60 mg of the solid obtained at pH 8.64, with the highest percentage of cobalt (64%, 19.16 mg Co), was treated with 4 ml of 37wt% concentrated HCl for 30 minutes at room temperature to transform the carbonates into the corresponding chlorides, with a second solution thereby being obtained. The liquid from the second solution was filtered with a conical funnel and filter paper (F4573-Thick, basis weight 73 g/m², thickness 170 µm), evaporated under reduced pressure (50°C, 450 mbar), and the crude obtained was dried in an oven at 80°C for 16 hours and then 60 mg of dry crude were dissolved in 1.5 ml of CH₃CN, with a third solution thereby being obtained, and 2.1 equivalents of thiazol-4-one **3b** (133.77 mg), which had been previously dissolved in 1.5 ml of MeOH, with respect to the cobalt present in the crude (64.08%), were added dropwise to this third solution. After stirring the mixture (200 rpm) for 16 h at room temperature, the solid obtained was filtered in a filter funnel with a size 3 porous plate, washed with 4 ml of ethyl ether, and dried using a water jet pump under reduced pressure (400 mbar). The organometallic complex obtained with molecular formula L₂CoCl₂ (L = thiazol-4-one **3b**) was obtained with a yield of 79%. Quantification of the metal content of the solid obtained by means of ICP-AES was performed as described in this document and the values obtained are shown in Table 2:

**Table 2. Metal content of the organometallic complex formed between the ligand 3b and the crude comprising cobalt.**

| **ICP-AES** | **Al** | **Co** | **Cu** | **Li** |
|---|---|---|---|---|
| % (purity) | 2.53 | **92.12** | 5.28 | 0.06 |

Finally, the release of ligand **3b** was carried out spontaneously by means of liquid-liquid extraction of the organometallic complex formed with cobalt (L₂CoCl₂) in a 1:1 mixture of H₂O and CH₂Cl₂ at room temperature. Therefore, the separation and evaporation of the two phases released mostly the pink CoCl₂·6H₂O in the aqueous phase and the ligand **3b** in the organic phase. The metal content of each of the phases was then quantified by means of ICP-AES following the sample treatment method described in this document, and the results obtained are shown in Table 3:

**Table 3. Metal content of the aqueous and organic phases obtained after liquid-liquid extraction of the organometallic complex formed between the chelating ligand 3b and cobalt in a 1:1 mixture of H₂O and CH₂Cl₂.**

| **Aqueous phase (CoCl2)** | | | | |
|---|---|---|---|---|
| **ICP-AES** | **Al** | **Co** | **Cu** | **Li** |
| mg of metal/g of product | 6.82 | 282.04 | 1.02 | 0.07 |
| % (purity) | 5.00 | **94.5** | 0.32 | 0.19 |

| **Organic phase** | | | | |
|---|---|---|---|---|
| **ICP-AES** | **Al** | **Co** | **Cu** | **Li** |
| mg of metal/g of product | 0.20 | 7.86 | 8.20 | 0.00 |

In the aqueous phase, CoCl₂ could be recovered with an extraction efficiency greater than 89% and a purity of 94.5%. In the organic phase, a minimal presence of cobalt could be determined by means of ICP-AES, probably due to the existence of undissociated L₂CoCl₂ complex, and most of the copper. The yield of the ligand **3b** recovered in the organic phase, after evaporation of CH₂Cl₂ under reduced pressure (20°C, 450 mbar), was 91%.

### EXAMPLES 3-6: Recovery of cobalt from depleted LCO batteries using ligands 1, 2, 3a, and 3c

The method described for Example 2 was repeated with each of the ligands **1, 2, 3a,** and **3c.** That is, starting from the *black mass* (20 g) from discharged LIB batteries (anode and cathode) metal chlorides were prepared by means of leaching said black mass with 200 ml of 4 M HCl, maintaining the reaction mixture for 3 hours at 80°C, thereby obtaining a first aqueous solution. The metal chlorides obtained in this first aqueous solution were separated from the solid remains by means of decantation and filtration with a conical funnel and filter paper (F4573-Thick, basis weight 73 g/m², thickness 170 µm). This first solution was then basified at different pH values, with 3 precipitates thereby being collected by means of filtration, the first two fractions being obtained after treating the first solution obtained after leaching with 21 g and 8 g of Na₂CO₃ for pH= 3.94 and pH= 8.64, respectively, whereas the third fraction was obtained after treating said solution with 3 g of Na₃PO₄ at pH= 10.7.

Quantification of the metal content in each of the precipitates obtained at each pH value was carried out by means of inductively coupled plasma atomic emission spectroscopy (ICP-AES) after treatment of said solid precipitates with 0.1-0.2 ml of concentrated HNO₃ and subsequent 1:5000 dilution; and it was found that the fraction containing a higher % of Co was the one obtained at a pH of 8.64 in which the following results were also obtained for the rest of the metals present therein (Table 1): To achieve the selective separation of cobalt from the rest of the metals present in the battery, 60 mg of the solid obtained at pH 8.64, with the highest percentage of cobalt (64%, 19.16 mg Co), was treated with 4 ml of 37% concentrated HCl for 30 minutes at room temperature to transform the carbonates into the corresponding chlorides, with a second solution thereby being obtained. The liquid in this second solution obtained was evaporated under reduced pressure (50°C, 450 mbar) and the crude obtained was dried in an oven at 80°C for 16 hours. Next, 60 mg of the dry crude were dissolved in 1.5 ml of CH₃CN, obtaining a third solution, and 2.1 equivalents of each of the ligands **1** (152.57 mg), **2** (76.93 mg), **3a** (133.01 mg), and **3c** (167.04 mg) (previously dissolved in 1.5 ml of MeOH) with respect to the cobalt present in the crude (64.08%), were added to this third solution.

After 16 hours at room temperature, the solid obtained for each ligand was filtered in a filter funnel with a size 3 porous plate, washed with 4 ml of ethyl ether, and dried using a water jet pump under reduced pressure of 400 mbar. The organometallic complex was obtained with a yield of 73% with ligand **1,** 82% with ligand **2,** 77% with ligand **3a,** and 74% with ligand **3c.** Quantification of the metal content of the solid obtained in each case by means of ICP-AES is shown in Table 4:

**Table 4. Metal content of the organometallic complex formed between ligands 1, 2, 3a, and 3c and the crude comprising cobalt.**

| **Ligand (L)** | **Complex** | **ICP-AES** | **Al** | **Co** | **Cu** | **Li** |
|---|---|---|---|---|---|---|
| **1** | L₂CoCl₂ | % (purity) | 5.70 | **87.73** | 6.56 | 0 |
| **2** | L₂CoCl₂ | % (purity) | 3.64 | **94.41** | 1.91 | 0.05 |
| **3a** | L₂CoCl₂ | % (purity) | 4.82 | **86.52** | 8.65 | 0 |
| **3c** | L₂CoCl₂ | % (purity) | 4.20 | **77.8** | 5.12 | 0.05 |

Finally, the release of each of the ligands **1, 2, 3a,** and **3c** was carried out spontaneously by means of liquid-liquid extraction of the organometallic complex obtained between each of these ligands and cobalt in a 1:1 mixture of H₂O and CH₂Cl₂ at room temperature. Therefore, the separation and evaporation of the two phases released mostly the pink CoCl₂.6H₂O in the aqueous phase and the corresponding ligands **1, 2, 3a,** and **3c** in the organic phase. The metal content of each of the phases was then quantified by means of ICP-AES and the results obtained for each of the ligands are shown in Table 5:

**Table 5. Metal content of the aqueous and organic phases obtained after liquid-liquid extraction of the organometallic complex formed between the chelating ligands 1, 2, 3a, and 3c and cobalt in a 1:1 mixture of H₂O and CH₂Cl₂.**

| **Aqueous phase** | | | | | |
|---|---|---|---|---|---|
| **Ligand (L)** | **ICP-AES** | **Al** | **Co** | **Cu** | **Li** |
| **1** | mg of metal/g of product | 7.15 | 341.69 | 20.97 | 0 |
| | % (purity) | 4.14 | **90.69** | 5.17 | 0 |
| **2** | mg of metal/g of product | 5.65 | 313.76 | 0.10 | 0.07 |
| | % (purity) | 3.78 | **96.00** | 0.03 | 0.19 |
| **3a** | mg of metal/g of product | 3.78 | 208.67 | 6.69 | 0.02 |
| | % (purity) | 3.70 | **93.33** | 2.78 | 0.19 |
| **3c** | mg of metal/g of product | 3.40 | 205.35 | 3.20 | 0.01 |
| | % (purity) | 2.50 | **81.24** | 0.02 | 0.15 |

| **Organic phase** | | | | | |
|---|---|---|---|---|---|
| **Ligand (L)** | **ICP-AES** | **Al** | **Co** | **Cu** | **Li** |
| **1** | mg of metal/g of product | 0.44 | 1.30 | 0.77 | 0 |
| **2** | mg of metal/g of product | 0.35 | 12.95 | 4.81 | 0.01 |
| **3a** | mg of metal/g of product | 0.09 | 5.16 | 4.33 | 0.00 |
| **3c** | mg of metal/g of product | 0.25 | 10.40 | 3.86 | 0.01 |

As can be seen, CoCl₂ in the aqueous phase could be recovered in each case with an extraction efficiency greater than 80% and a purity greater than 90%. Like with the ligand **3b,** in the organic phase a minimal presence of cobalt could be determined for each of the ligands **1, 2, 3a,** and **3c** by means of ICP-AES, probably due to the existence of undissociated organometallic complex, and most of the copper. The yield of each of the ligands **1, 2, 3a,** and **3c** recovered in the organic phase, after evaporation of dichloromethane under reduced pressure (20°C, 450 mbar), was 76%, 78%, 85%, and 77%, respectively.

## Claims

1. A method for recovering cobalt from lithium ion batteries, **characterized in that** the method comprises the steps of:
(i) providing a *black mass* containing metals from lithium ion batteries in their entirety;
(ii) leaching the *black mass* of step (i) to obtain a first solution comprising the metals contained in said black mass;
(iii) basifying the first solution obtained in step (ii) to obtain a precipitate comprising cobalt, preferably in the form of cobalt carbonate, CoCO₃;
(iv) dissolving the precipitate obtained in step (iii) with concentrated HCl, HBr or HI, thereby obtaining a second solution, and evaporating the second solution to obtain a crude comprising a cobalt salt, preferably in the form of CoCl₂;
(v) forming an organometallic cobalt complex by contacting the crude obtained in step (iv) with a chelating agent of formula (I) 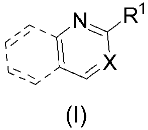
wherein X is selected independently from C and N,
R¹ is: = SH, 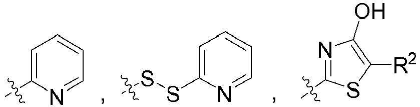
and wherein R² is H, alkyl, or aryl;
in the presence of a mixture of solvents comprising an alcohol, selected from the group consisting of methanol, ethanol, and isopropanol, and acetonitrile; and
(vi) separating the cobalt in salt form and recovering the chelating agent from the organometallic complex obtained in step (v) by means of liquid-liquid extraction.

2. The method for recovering cobalt according to claim 1, wherein the leaching in step (ii) is performed with an aqueous HCl, HBr, or HI solution at a concentration of 3-6 M, preferably at a concentration of 4-5 M, more preferably at a concentration of 4 M.

3. The method for recovering cobalt according to claim 2, wherein the leaching in step (ii) is performed for 3 to 5 hours, preferably for a time of 3 hours, at a temperature of 50-90°C, preferably 75-80°C.

4. The method for recovering cobalt according to any of claims 1 to 3, wherein basifying the first solution in step (iii) is performed at a pH from 6.5 to 8.7.

5. The method for recovering cobalt according to claim 4, wherein basifying the first solution in step (iii) is performed with an inorganic base selected from the group consisting of Na₂CO₃, K₂CO₃, NaHCO₃, KOH, NaOH, or combinations thereof.

6. The method for recovering cobalt according to any of claims 1 to 5, wherein the chelating agent of step (v) is selected from the group consisting of:

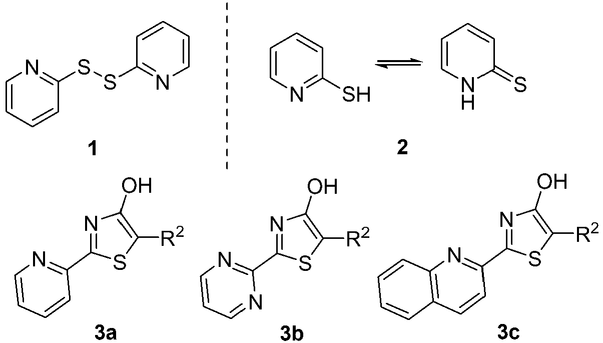

7. The method for recovering cobalt according to any of claims 1 to 6, wherein in step (v) 2 to 5 equivalents, preferably 2.1 equivalents, of the chelating agent are added with respect to the cobalt present in the crude.

8. The method for recovering cobalt according to any of claims 1 to 7, wherein the liquid-liquid extraction of step (vi) is carried out by means of automatic or manual decantation, or percolation.

9. The method for recovering cobalt according to claim 8, wherein the liquid-liquid extraction of step (vi) comprises several extractions in a separatory funnel with a mixture of water and an immiscible organic solvent, preferably dichloromethane, chloroform, ethyl acetate, or carbon tetrachloride.

10. The method for recovering cobalt according to any of claims 1 to 9, wherein the cobalt salt of step (vi) is a divalent salt or mixture of salts with a predominance of the divalent salt.

11. The method for recovering cobalt according to any of claims 1 to 10, wherein the cobalt salt of step (vi) is a halide.

12. The method for recovering cobalt according to claim 11, wherein the cobalt salt of step (vi) is cobalt chloride.

13. Use of a chelating agent in the recovery of cobalt from lithium ion batteries, wherein the chelating agent has the formula (I) 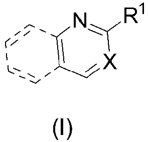
wherein X is selected independently from C and N,
R¹ is: = SH, 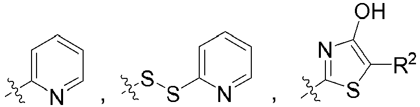
and wherein R² is a substituent: H, alkyl, or aryl;

14. Use of a chelating agent according to claim 13, wherein the chelating agent of formula (I) is selected from the group consisting of:
